# EUROPÄISCHE PATENTSCHRIFT

(11) **EP 2 165 864 B1**
(45) Veröffentlichungstag und Bekanntmachung des Hinweises auf die Patenterteilung: **03.04.2013**
(21) Anmeldenummer: 09014893.3
(22) Anmeldetag: 11.02.2004
(51) Int. Cl.: B60G 15/06

(54) **Einrichtung zum Befestigen einer Stange eines Feder-Dämpfer-Systems**
Device for attaching a rod of a spring cushioning system
Dispositif de fixation d'un tronçon d'un système d'amortisseur à ressort

(43) Veröffentlichungstag der Anmeldung: 24.03.2010
(62) Teilanmeldung aus: 04290364.1
(73) Patentinhaber: Anvis SD France SAS, 58302 Decize Cedex (FR)
(72) Erfinder: Charette, Christian, 03400 Yzeure (FR)
(74) Vertreter: Schmid, Nils T.F.

(56) Entgegenhaltungen:
- EP-A- 0 342 725
- WO-A1-01/92040
- WO-A1-02/06699
- DE-A1- 3 501 106
- DE-A1- 3 619 942
- FR-A- 2 783 203
- US-A1- 2003 047 897
- PATENT ABSTRACTS OF JAPAN Bd. 2000, Nr. 21, 3. August 2001 (2001-08-03) -& JP 2001 099218 A (BRIDGESTONE CORP), 10. April 2001 (2001-04-10)

## Beschreibung

Die Erfindung betrifft eine Einrichtung zum Befestigen einer in einem Dämpfergehäuse zumindest teilweise verschiebbar aufnehmbaren Stange eines Feder-Dämpfer-Systems an einem Karosserieteil eines Kraftfahrzeugs.

Eine derartige Befestigungseinrichtung ist aus der FR 2793732 bekannt. Die Befestigungseinrichtung umfaßt einen Träger, über den die Stange mit dem Karosserieteil elastisch verbunden ist. An dem Träger ist ein erstes Federelement vorgesehen, das zum elastischen Aufnehmen und Dämpfen einer Schwingungsbelastung in einer zur Axialrichtung der Stange senkrechten Richtung, also Radialrichtung, von der Stange in das Karosserieteil und umgekehrt ausgelegt ist. Ein zweites Federelement ist gemäß der Befestigungseinrichtung der FR 2793732 vorgesehen, um die Endspiralwindung zum Abstützen einer Spiralfeder des Feder-Dämpfer-Systems an dem Träger elastisch tragend aufzunehmen. Ein drittes elastisches Federelement ist an der Stange befestigt, um als elastischer Anschlag Überschwingungs-Belastungen im wesentlichen in Axialrichtung der Stange von dem Dämpfergehäuse in den Träger einzuleiten und zu unterdrücken. Zwischen dem zweiten elastischen Federelement und dem Träger ist ein Wälzlager angeordnet, dessen eine Lageschale durch den Träger selbst gebildet ist.

Es ist nachteilig bei dieser bekannten Befestigungseinrichtung, daß sie nur mit einem hohen Montageaufwand betriebsfertig an dem Karosserieteil eingebaut werden kann. Denn das Wälzlager sowie das zugeordnete dritte Federelement kann nur montiert werden, sobald der Träger sowie das erste und zweite Federelement an der Stange des Feder-Dämpfer-Systems und dem Karosserieteil angebaut sind. Vor allem das genaue Positionieren des Wälzlagers sowie des dritten Federelements ist schwierig realisierbar in Anbetracht der hohen Federkraft der Spiralfeder, die unmittelbar auf das Wälzlager einwirkt. Mit dem hohen Montageaufwand gehen hohe Fertigungskosten einher, weswegen die bekannte Befestigungeinrichtung insbesondere für hohe Stückzahlen unwirtschaftlich ist.

Dasgattungsbildende Dokument DE-A-3501106 offenbart eine Befestigungseinrichtung für ein Federdämpfersystem, bei der ein Träger die Dämpferstange mit einem Karosserieteil verbindet. Der Träger ist in eine Elastomerfeder eingebettet, wobei ein Abschnitt der Elastomerfeder die Dämpferstange in Radialrichtung stützt, ein zweiter Abschnitt der Elastomerfeder die Endspiralwindung einer Spiralfeder gegenüber dem Träger dämpft und ein dritter Abschnitt eine axiale Anschlagfeder bildet. Ein Wälzlager ist in Radialrichtung zwischen dem Karosserieteil und dem Träger angeordnet. Die Befestigungseinrichtung ist kompliziert zu montieren und kostspielig in der Fertigung, da einerseits die Elastomerfeder vorkomprimiert werden muss, um den Träger am Karosserieteil zu befestigen und andererseits ein Innenring des Wälzlagers zwischen Träger und Karosserieteil korrekt platziert werden muss.

Es ist Aufgabe der Erfindung, die Nachteile des Standes der Technik zu überwinden, insbesondere eine Einrichtung zum Befestigen einer in einem Dämpfergehäuse zumindest teilweise verschiebbar aufnehmbaren Stange eines Feder-Dämpfer-Systems an einem Karosserieteil eines Kraftfahrzeugs bereitzustellen, das leicht herstellbar und auf einfache Weise in das Kraftfahrzeug einbaubar ist.

Diese Aufgabe wird durch die Merkmale von Anspruch 1 gelöst. Danach ist jedes Federelement mit einem Trägerbauteil kraftschlüssig verbunden, und das Wälzlager ist auf einer der Feder, insbesondere Spiralfeder, abgewandten Seite des Trägers angeordnet. Mit der erfindungsgemäßen Maßnahme kann eine Feder-Träger-Anordnung als separates Bauteil vertrieben und als Einheit in ein Feder-Dämpfer-System integriert werden. Ohne weiteres ist schließlich mit der erfindungsgemäßen Maßnahme gewährleistet, das Wälzlager zwischen dem Karosserieteil und dem Träger unterbringen zu können. Dabei können unterschiedliche Zwischenschalenelemente eingesetzt werden, um ein individuelles Anpassen des Wälzlagers an den Träger auf einfache Weise zuzulassen. Mit der erfindungsgemäßen Anordnung des Wälzlagers auf der der Feder abgewandten Seite des Trägers ist außerdem die Montag insofern erleichtert, als die axiale und radiale Instabilität der Feder des Feder-Dämpfer-Systems, insbesondere deren hohe Zug- oder Druckkräfte, die Montage des Wälzlagers insbesondere beim Einstellen des Wälzlagerspiels nicht behindern. Überraschenderweise stellte sich mit der erfinderischen Maßnahme, jedes Federelement kraftschlüssig am Trägerbauteil anzubringen, heraus, daß die Federelement-Träger-Anordnung für spezifische Belastungen in Axial- und/oder Radialrichtung einstellbar ist. Dies ist insbesondere dann von Vorteil, wenn sämtliche Federelemente als strukturell separate Bauteile ausgeführt sind. Je nach Auslegung der Dimension und Art des Materials kann die Elastizität des Federelements eingestellt, um somit das Verhalten der Federelement-Träger-Anordnung für vorbestimmbare Belastungen wunschgemäß beeinflussen zu können.

Bei einer Weiterbildung der Erfindung ist das Wälzlager zwischen dem Träger und dem Karosserieteil angeordnet. Auf diese Weise ist die Montage, insbesondere das Einstellen des Lagerspiels, vereinfacht. Einflüsse durch die Spiralfeder des Feder-Dämpfer-Systems sind ausgeschlossen, insbesondere dann, wenn die Feder des Feder-Dämpfer-Systems erst nach der Montage des Wälzlagers vorgenommen wird.

Bei einer Weiterbildung der Erfindung sind die Federelemente mit dem Träger fest verbunden. Vorzugsweise ist/sind mindestens ein Federelement, vorzugsweise zwei Federelemente, insbesondere das erste und zweite Federelement an dem Träger anvulkanisiert. Auf diese Weise kann ein vollkommen eigenständiges Bauteil geschaffen werden, das als einfach herstellbare Einheit bestehend aus drei Federelementen und dem Träger an der Stange des Feder-Dämpfer-Systems anbringbar ist.

Bei einer bevorzugten Weiterbildung der Erfindung ist die Befestigungseinrichtung modular aufgebaut. Dabei kann ein Modul durch die Anordnung aus Träger und Federelementen gebildet sein. Ein weiteres Modul ist das Wälzlager oder die Wälzlager-Anordnung bestehend aus Wälzkörpern und Laufringen. Dabei kann die Träger-Federelement-Anordnung oder die Wälzkörper-Struktur als Standard dienen, bezüglich welcher die jeweils andere Anordnung oder Struktur je nach gewünschter Betriebsanordnung abstimmbar ist.

Damit ein konstantes Lagerspiel zwischen dem Wälzlager und dem Karosserieteil gewährleistet ist, ist zwischen dem Karosserieteil und dem Träger kein elastisches Federelement angeordnet. Diese Maßnahme verbessert im Gegensatz zur bekannten Befestigungseinrichtung den Montageaufwand dahingehend, daß durch elastische Elemente induzierte Freiheitesgrade bei der Montage des Wälzlagers vermieden werden.

Bei einer bevorzugten Ausführung der Erfindung ist der Träger im wesentlichen in einer T-Form gestaltet. Dabei kann ein Seitenschenkel dazu benutzt werden, das erste Federelement zu tragen, wobei ein anderer, dem einen Seitenschenkel gegenüberliegender Seitenschenkel dazu vorgesehen ist, das Wälzlager einerseits und das zweite Federelement andererseits zu halten. Vorzugsweise ist am Mittelschenkel das dritte Federelement derart angeordnet, daß Anschlagskräfte, die beim Durchfedern, also beim Nähern der Befestigungseinrichtung an das Dämpfergehäuse, stoßartig von dem letzteren in den Träger im wesentlichen in einer axialen Richtung eingeleitet werden, gedämpft und abgeleitet werden.

Um insbesondere Axialbelastungen möglichst schonend in den Träger einleiten zu können, ist der Mittelschenkel des T-förmigen Trägers im wesentlichen parallel zur Axialrichtung der Stange ausgerichtet.

Eine besonders bevorzugte Form des T-förmigen Trägers ist dann gebildet, wenn der Mittelschenkel verstärkt, insbesondere mit einem größeren Materialeinsatz, gegenüber den Seitenschenkeln ausgebildet ist. Dabei stellte sich heraus, daß derartig geformte Träger eine wesentlich höhere Lebenserwartung gegen Ermüdungsbruch aufweisen, als die bekannten Trägerformen. Vorzugsweise ist das Federelement aus einem Elastomer gebildet und/oder der Träger aus einem starren Kunststoff.

Weiterhin betrifft die Erfindung ein Feder-Dämpfer-System mit der erfindungsgemäßen Befestigungseinrichtung.

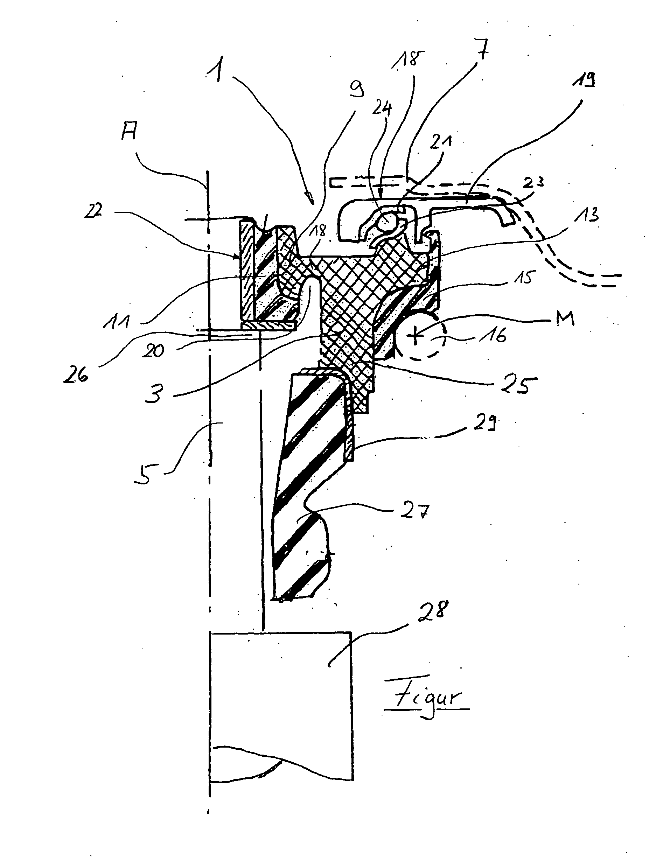

Weitere Eigenschaften, Vorteile und Merkmale der Erfindung werden durch die folgende Beschreibung einer bevorzugten Ausführung der Erfindung anhand der beiliegenden Zeichnung deutlich, die eine prinzipielle Querschnittsskizze einer erfindungsgemäßen Befestigungseinrichtung zeigt.

Die Befestigungseinrichtung 1 gemäß der Figur umfaßt als Hauptbestandteil einen im wesentlichen T-förmigen Träger 3. An einem der Stange 5 eines Feder-Dämpfer-Systems (nicht näher dargestellt) nahen Seitenschenkel 9 des Trägers 3 ist ein erstes Federelement 11 vorgesehen, das den Träger 3 an der Stange 5 abstützt. An einem der Stange 5 distalen Seitenschenkel 13 des Trägers 3 ist auf einer einem Karosserieteil 7 abgewandten Seite des Seitenschenkels 13 ein zweites Federelement 15 angeordnet. An dem halb ringförmig ausgebildeten zweiten Federelement 15 stützt sich eine Spiralfeder 16 des Feder-Dämpfer-Systems mit einer ihrer Endwindungen ab. Die Federkräfte der Spiralfeder 16 werden über das zweite Federelement 15 in den Träger 3 eingeleitet. Für einen gleichmäßigen Kraftfluß von der Spiralfeder über das zweite Federelement 15 in den Träger 3 ist der Übergangsbereich von dem Seitenschenkel 13 in einen Mittel- oder Längsschenkel 25 des T-förmigen Trägers 3 abgerundet. Auf einer dem Karosserieteil 7 zugewandten Seite des Seitenschenkels 13 des Trägers 3 ist eine Wälzlager-Anordnung 18 vorgesehen, die einen Montageträger 19 sowie zwei Laufringe 21 und 23 aufweist, zwischen denen eine Kugel 24 als Wälzkörper angeordnet ist. Der Laufring 23 ist an die Form der anliegenden Außenseite des Trägers 3 angepaßt.

Am Übergangsbereich 18 des Seitenschenkels 9 und Mittelschenkels 25 des T-förmigen Trägers 3 ist eine Materialschwächung durch eine insbesondere umlaufende Aussparung 20 vorgesehen, um eine zusätzliche Elastizität der Befestigungseinrichtung im Hinblick auf Belastungen in zur Axialrichtung A senkrechter Radialrichtung zu gewährleisten, welche radiale Belastung betriebsmäßig geringer als die axialen Dämpfungsbelastungen ist.

Das erste Federelement 11 steht nicht unmittelbar mit der Stange 5 in Vulkanisationskontakt. Eine Zwei-Ring-Anordnung 22 mit einem ersten, parallel zur Axialrichtung A angeordneten Ringteil und einem dazu senkrecht liegenden Ringteil ist die Montierbarkeit der Befestigungseinrichtung 1 erleichtert, indem die Zwei-Ring-Anordnung 22 auf die Stange 5 aufgepreßt wird. Ein an der Stange vorgesehener Absatz 26 dient zur axialen Positionierung, insbesondere zum Verschrauben, der Befestigungseinrichtung 1.

Das erste Federelement 11 zur elastischen Kopplung der Befestigungseinrichtung an die Stange 5 ist derart dimensioniert, insbesondere mit einer derartigen Dicke versehen, daß eine Kippbewegung der Befestigungseinrichtung 1 um die Axialrichtungsachse (A) möglich ist. Auf diese Weise wird dem Feder-Dämpfer-System auch eine Flexibilität in Radialrichtung verliehen. Die Kippbewegung wird auch durch die Aussparung 20 des Trägers 3 hervorgerufen oder verstärkt.

Um ein stabiles Abstützen der Spiralfeder 16 an dem Träger 3 gewährleisten zu können, erstreckt sich der Seitenschenkel 13 des T-förmigen Trägers über den Belastungseingreifmittelpunkt M der Endwindung der Spiralfeder 16 radial hinaus.

Am freien Ende des Mittelschenkels 25 des T-förmigen Trägers 3 ist ein den Mittelschenkel 25 im wesentlichen axial verlängerndes drittes Federelement 27 entweder direkt oder über eine Verbindungshülse 29 befestigt. Der Mittelschenkel 25 des T-förmigen Trägers 3 ist im wesentlichen parallel zur Axialrichtung A der Stange 5 ausgerichtet. Das dritte Federelement 27 dient als elastischer Anschlag am Dämpfergehäuse 28 für zu große Einfederwege des Feder-Dämpfer-Systems.

Wie aus der Figur ersichtlich ist, umfaßt die erfindungsgemäße Befestigungseinrichtung im wesentlichen zwei Moduleinheiten bestehend aus einerseits einer Federelement (11, 15, 27) - Träger (3) - Anordnung, die als Fertigungseinheit an der Stange 5 befestigbar ist. Andererseits wird eine Einheit durch die Wälzlager-Anordnung 18 gebildet, die zum Verbinden der Federelement-Träger-Einheit an das Karosserieteil 7 eines Kraftfahrzeugs (nicht dargestellt) befestigbar ist.

### Bezugszeichenliste

- 1: Befestigungseinrichtung
- 3: Träger
- 5: Stange
- 7: Karosserieteil
- 9: Seitenschenkel
- 11: erstes Federelement
- 13: Seitenschenkel
- 15: zweites Federelement
- 16: Spiralfeder
- 18: Wälzlager-Anordnung
- 19: Montageträger
- 20: Aussparung
- 21: Laufring
- 22: Zwei-Ring-Anordnung
- 23: Laufring
- 24: Kugel
- 25: Mittel- oder Längsschenkel
- 26: Absatz
- 27: drittes Federelement
- 28: Dämpfergehäuse
- 29: Befestigungshülse

- A: Axialrichtung
- M: Mittelpunkt

## Patentansprüche

1. Einrichtung zum Befestigen einer in einem Dämpfergehäuse zumindest teilweise verschiebbar aufnehmbaren Stange (5) eines Feder-Dämpfer-Systems an einem Karosserieteil (7) eines Kraftfahrzeugs umfassend:
- einen mit einem Karosserieteil (7) zu verbindenden Träger (3);
- ein erstes Federelement (11) zum elastischen Abstützen der Stange (5) an dem Träger (3) in einer im wesentlichen radialen Belastungsrichtung;
- ein zweites Federelement (15) zum elastischen Abstützen einer Feder (16), insbesondere einer Spiralfeder, des Feder-Dämpfer-Systems an dem Träger (3) in einer im wesentlichen axialen Belastungsrichtung A;
- ein drittes Federelement (27) zum elastischen Begrenzen der Feder-Dämpfungsbewegung oder des Federwegs der Einrichtung (1) zum Dämpfergehäuse hin, in einer im wesentlichen axialen Richtung A; und
- ein Wälzlager (18) zum Bereitstellen einer Relativbewegung, einer Rotationsbewegung, der Feder (16) gegenüber dem Karosserieteil (7), wobei das Wälzlager (18) auf einer der Feder (16) abgewandten Seite des Trägers (3) angeordnet ist;
wobei jedes Federelement (11, 15, 27) mit dem Träger (3) kraftschlüssig verbunden ist und der Träger (3) einen im wesentlichen T-förmigen Querschnitt hat,
**dadurch gekennzeichnet, daß** an einem Seitenschenkel des Trägers (3) das erste Federelement angeordnet ist, an dem anderen Seitenschenkel das Wälzlager einerseits und das zweite Federelement andererseits angeordnet ist und am Mittelschenkel das dritte Federelement angeordnet ist und daß der Mittel- oder Längsschenkel (25) im wesentlichen parallel zur Axialrichtung A der Stange (5) ausgerichtet ist.

2. Einrichtung nach Anspruch 1, **dadurch gekennzeichnet, daß** das Wälzlager (18) zwischen dem Träger (3) und dem Karosserieteil (7) angeordnet ist.

3. Einrichtung nach Anspruch 1 oder 2, **dadurch gekennzeichnet, daß** die Federelemente (11, 15, 27) mit dem Träger (3) fest verbunden sind.

4. Einrichtung nach einem der Ansprüche 1 bis 3, **dadurch gekennzeichnet, daß** zumindest ein Federelement, vorzugsweise zwei Federelemente, insbesondere das erste und zweite Federelement an dem Träger (3) anvulkanisiert ist/sind.

5. Einrichtung nach einem der Ansprüche 1 bis 4, **dadurch gekennzeichnet, daß** sie einen modularen Aufbau aufweist, wobei insbesondere eine Anordnung aus Träger (3) und Federelementen (11, 15, 27) ein Modul bildet und insbesondere das Wälzlager (18) ein weiteres Modul bildet.

6. Einrichtung nach einem der Ansprüche 1 bis 5 **dadurch gekennzeichnet, daß** das Wälzlager (18) ohne Zwischenschalten eines Federelement an dem Karosserieteil (7) befestigt ist.

7. Einrichtung nach einem der Ansprüche 1 bis 6, **dadurch gekennzeichnet, daß** der Mittel- oder Längsschenkel (25) im Querschnitt stärker als die Seitenschenkel (11, 13) ausgebildet ist.

8. Einrichtung nach einem der Ansprüche 1 bis 7, **dadurch gekennzeichnet, daß** die Federelemente (11, 15, 27) aus einem Elastomer gebildet sind und/oder der Träger (3) aus einem starren Kunststoff oder einem Metall gebildet ist.

9. Feder-Dämpfer-System mit einer nach einem der Ansprüche 1 bis 8 ausgebildeten Einrichtung zum Befestigen einer in einem Dämpfergehäuse zumindest teilweise verschiebbar aufnehmbaren Stange an einem Karosserieteil eines Kraftfahrzeugs.

## Claims

1. A device for mounting a rod (5) of a spring and damper system, at least partially displaceable and receivable in a damper housing, to a chassis part (7) of a motor vehicle, comprising:
- a support (3) to be connected to a chassis part (7);
- a first spring element (11) for elastically supporting the rod (5) at the support (3) in an essentially radial direction;
- a second spring element (15) for elastically supporting a spring (16), in particular a coil spring, of the spring and damper system at the support (3) in an essentially axial direction A;
- a third spring element (27) for elastically limiting the spring-damping movement or the deflection of the device (1) towards the damper housing in an essentially axial direction A; and
- a roller bearing (18) for providing a relative movement, rotational movement of the spring (16) with respect to the chassis part (7), wherein the roller bearing (18) is disposed on a side of the support (3) facing away from the spring (16);
wherein each spring element (11, 15, 27) is connected to the support (3) by a non-positive fit and the support (3) essentially has a T-cross section,
**characterised in that** the first spring element is disposed at a lateral leg of the support (3), the roller bearing on one side and the second spring element on another side are disposed at the other lateral leg, and the third spring element is disposed at the middle leg, and that the middle leg or longitudinal leg (25) is essentially aligned in parallel with the axial direction A of the rod (5).

2. Device as in claim 1, **characterised in that** the roller bearing (18) is disposed between the support (3) and the chassis part (7).

3. Device as in claim 1 or 2, **characterised in that** the spring elements (11, 15, 27) are solidly connected to the support (3).

4. Device as in one of the claims 1 to 3, **characterised in that** at least one spring element, preferably two spring elements, in particular the first and the second spring element, are vulcanised to the support piece (3).

5. Device as in one of the claims 1 to 4, **characterised in that** it has a modular structure, wherein in particular an arrangement consisting of support (3) and spring element (11, 15, 27) form a module and in particular the roller bearing (18) forms another module.

6. Device as in one of the claims 1 to 5, **characterised in that** the roller bearing (18) is mounted to the chassis part (7) without interposing a spring element.

7. Device as in claims 1 to 6, **characterised in that** the middle leg or longitudinal leg (25) is formed thicker at its cross section than the lateral legs (11, 13).

8. Device as in one of the claims 1 to 7, **characterised in that** the spring elements (11, 15, 27) are made of an elastomer and/or the support (3) is made of a rigid synthetic material or a metal.

9. Spring and damper system with a device according to one of the claims 1 to 8 for mounting a rod, at least partially displaceable and receivable in a damper housing, to a chassis part of a motor vehicle.

## Revendications

1. Dispositif pour fixer une barre (5), logeable dans un boîtier d'amortisseur de façon à pouvoir coulisser au moins partiellement, d'un système ressort-amortisseur sur une partie de carrosserie (7) d'un véhicule automobile comprenant :
- un support (3) à être relié à une partie de carrosserie (7) ;
- un premier élément de ressort (11) pour l'appui élastique de la barre (5) sur le support (3) dans une direction de charge sensiblement radiale ;
- un second élément de ressort (15) pour l'appui élastique d'un ressort (16), en particulier d'un ressort en spirale, du système ressort-amortisseur sur le support (3) dans une direction de charge A sensiblement axiale ;
- un troisième élément de ressort (27) pour la délimitation élastique du mouvement d'amortissement à ressort ou de la course du ressort du dispositif (1) en direction du boîtier d'amortisseur, dans une direction A sensiblement axiale ; et
- un palier de roulement (18) pour la mise à disposition d'un déplacement relatif, un déplacement de rotation, du ressort (16) par rapport à la partie de carrosserie (7), le palier de roulement (18) étant disposé sur un côté, opposé au ressort (16), du support (3),
dans lequel chaque élément de ressort (11, 15, 27) est relié au support (3) par adhérence, et le support (3) présente une section sensiblement en forme de T, **caractérisé en ce que** le premier élément de ressort est disposé sur une branche latérale du support (3), le palier de roulement d'une part et le second élément de ressort d'autre part sont disposés sur l'autre branche latérale, et le troisième élément de ressort est disposé sur la branche centrale, et que la branche centrale ou longitudinale (25) est orientée sensiblement parallèlement à la direction axiale A de la barre (5).

2. Dispositif selon la revendication 1, **caractérisé en ce que** le palier de roulement (18) est disposé entre le support (3) et la partie de carrosserie (7).

3. Dispositif selon la revendication 1 ou 2, **caractérisé en ce que** les éléments de ressort (11, 15, 27) sont reliés de façon fixe au support (3).

4. Dispositif selon l'une quelconque des revendications 1 à 3, **caractérisé en ce qu'**au moins un élément de ressort, de préférence deux éléments de ressort, en particulier le premier et le second élément de ressort est/sont fixé(s) par vulcanisation au support (3).

5. Dispositif selon l'une quelconque des revendications 1 à 4, **caractérisé en ce qu'**il présente une structure modulaire, en particulier un arrangemnet constitué du support (3) et des éléments de ressort (11, 15, 27) formant un module et en particulier le palier de roulement (18) formant un autre module.

6. Dispositif selon l'une quelconque des revendications 1 à 5, **caractérisé en ce que** le palier de roulement (18) est fixé à la partie de carrosserie (7) sans l'interposition d'un élément de ressort.

7. Dispositif selon la revendication 1 à 6, **caractérisé en ce que** la branche centrale ou longitudinale (25) est conçue plus épaisse en section transversale que les branches latérales (11, 13).

8. Dispositif selon l'une quelconque des revendications 1 à 7, **caractérisé en ce que** les éléments de ressort (11, 15, 27) sont formés à base d'un élastomère et/ou le support (3) est formé à base d'une matière synthétique rigide ou d'un métal.

9. Système ressort-amortisseur comprenant un dispositif conçu selon l'une quelconque des revendications 1 à 8 pour la fixation d'une barre, logeable dans un boîtier d'amortisseur de façon à pouvoir coulisser au moins partiellement, sur une partie de carrosserie d'un véhicule.
